(19) Europäisches Patentamt
European Patent Office
Office européen des brevets

(11) Numéro de publication : **0 315 525 B1**

(12) # FASCICULE DE BREVET EUROPEEN

(45) Date de publication du fascicule du brevet : **29.01.92 Bulletin 92/05**

(51) Int. Cl.$^5$ : **C08F 8/32,** C08C 19/36

(21) Numéro de dépôt : **88402750.9**

(22) Date de dépôt : **03.11.88**

(54) **Composés polymères utilisables notamment comme additifs aux lubrifiants et compositions renfermant lesdits composés.**

(30) Priorité : **05.11.87 FR 8715347**

(43) Date de publication de la demande : **10.05.89 Bulletin 89/19**

(45) Mention de la délivrance du brevet : **29.01.92 Bulletin 92/05**

(84) Etats contractants désignés : **BE DE GB IT NL**

(56) Documents cités :
**EP-A- 0 002 286**
**EP-A- 0 061 889**
**EP-A- 0 087 526**
**BE-A- 793 660**
**DE-A- 3 018 841**
**US-A- 4 205 151**

(73) Titulaire : **SOCIETE NATIONALE ELF AQUITAINE**
**Tour Elf, 2, Place de la Coupole, La Défense 6**
**F-92400 Courbevoie (FR)**

(72) Inventeur : **Germanaud, Laurent**
**79, route Neuve**
**F-69540 Irigny (FR)**
Inventeur : **Truong Dinh,Nguyen**
**10, avenue du Général Leclerc**
**F-64000 Pau (FR)**
Inventeur : **Marie, Gilbert Résidence de France**
**- Bât. Auvergne**
**Avenue Charles de Gaulle**
**F-64000 Pau (FR)**
Inventeur : **Turello, Patrick**
**Tour E. - Le Grillon**
**F-69340 Francheville (FR)**

(74) Mandataire : **Boillot, Marc**
**SOCIETE NATIONALE ELF AQUITAINE**
**Division Propriété Industrielle Tour Elf**
**F-92078 Paris la Défense Cédex 45 (FR)**

**EP 0 315 525 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne des composés polymériques utilisables notamment comme additifs multifonctionnels aux lubrifiants.

On sait que les huiles lubrifiantes, et en particulier les huiles pour carter destinées aux moteurs à combustion interne, renferment des additifs variés servant à améliorer les performances desdites huiles lors de leur utilisation. Certains additifs sont utilisés pour augmenter l'indice de viscosité de l'huile tandis que d'autres assurent, par exemple, le maintien de la propreté du carter par mise en suspension des dépôts insolubles, encore appelés boues, se formant dans l'huile.

Les additifs destinés à améliorer l'indice de viscosité de l'huile doivent avoir, d'une part, un effet épaississant suffisant sur une huile lubrifiante légère aux températures élevées pour que les propriétés lubrifiantes de cette huile correspondent à celle d'une huile lubrifiante plus lourde et, d'autre part, un effet épaississant limité sur une huile lubrifiante légère aux basses températures pour éviter de perturber les caractéristiques de ladite huile à ces basses températures. Ce sont généralement des composés polymères à longues chaînes tels que, par exemple, polyisobutènes, polyméthacrylates, polyalkylstyrènes, copolymères partiellement hydrogénés du butadiène et du styrène, et copolymères amorphes d'éthylène et de propène.

Les additifs assurant le maintien de la propreté du carter sont d'une part les détergents tels que, par exemple, sulfonates, phénates, ou phosphates organiques de métal polyvalent, particulièrement efficaces pendant les marches "à chaud", et d'autre part les dispersants tels que, par exemple, les succinimides ou esters succiniques, alkylés par un polymère de l'isobutène ou du propène sur le carbone en alpha du carbonyle de la succinimide, ces additifs travaillant plus particulièrement pendant les marches "à froid", qui sont celles des automobiles s'arrêtant fréquemment.

On a proposé également des additifs pour huiles lubrifiantes destinés à assurer simultanément l'amélioration de l'indice de viscosité des huiles et la dispersion des boues qu'elles peuvent renfermer. De tels composés sont, par exemple, obtenus par introduction de monomères azotés soit par copolymérisation, soit par greffage sur un polymère épaississant. Les monomères dispersants azotés sont de préférence choisis parmi les maleimides, vinylimidazolines, vinylpyrrolidones, vinylpyridines ou N,N-dialkylaminoéthylméthacrylates. Les brevets suivants revendiquent l'utilisation de tels composés : EP 171167, EP 167195, EP 164807, EP 145369, US 4606834, US 3732334, BE 874068.

Néanmoins dans les lubrifiants, on recherche des additifs multifonctionnels présentant d'autres propriétés que améliorants de viscosité et dispersants. En particulier les formulateurs recherchent de plus en plus des additifs présentant une grande stabilité thermique et une résistance à l'oxydation importante en raison de la sévérité grandissante des conditions de fonctionnement des moteurs. On observe ainsi une augmentation de la température de travail du lubrifiant, particulièrement dans les moteurs diesels soumis à de fortes charges où la température en haut du piston, au voisinage de la première gorge peut atteindre, voire dépasser 350°C. Les lubrifiants ont tendance à s'oxyder lorsqu'ils sont soumis à ces températures élevées. Cette décomposition est proportionnelle à la stabilité thermique et à la résistance à l'oxydation de l'huile et des additifs. Elle donne lieu à la formation et au dépôt de composés résineux et de substances charbonneuses sur les parois du piston. Si ces dépôts deviennent trop importants, ils peuvent initier un gommage ou un grippage du piston et augmenter l'usure des pièces métalliques en mouvement. Il est donc important de contrôler et de limiter au mieux ces dépôts en utilisant des additifs efficaces et stables à températures élevées.

Dans l'art antérieur, la protection des huiles lubrifiantes par des molécules organiques antioxydantes est largement décrite. On distingue en général ces composés selon leur mode d'action : d'une part les inhibiteurs de radicaux libres (phénols encombrés, amines aromatiques, phénothiazines...) et d'autre part les produits qui détruisent les péroxydes (dithiophosphates ou dithiocarbamates métalliques).

On connaît également les désactivateurs métalliques (benzothiazoles, tétrazole...) qui protègent les métaux de l'action des composés oxygénés formés lors de la dégradation des lubrifiants. Ces composés ne sont pas des antioxydants au sens classique du terme, mais des anticorrosion ou passivateurs métalliques qui apportent une protection supplémentaire vis à vis des produits corrosifs formés par oxydation de l'huile.

L'utilisation des molécules antioxydantes de faible poids moléculaire peut présenter plusieurs inconvénients ; en particulier ces produits ont une solubilité limitée dans l'huile et sont parfois volatils et sublimables lorsque le moteur fonctionne à un régime proche de son régime maximum.

Ces inconvénients peuvent être éliminés en utilisant des polymères améliorants de viscosité qui portent des fonction antioxydantes. Un autre avantage de ces polymères multifonctionnels est de concentrer les structures antioxydantes portées par le polymère dans les parties supérieures du moteur lors des évaporations "flash" de l'huile, où la protection contre l'oxydation et la plus nécessaire.

Les polymères améliorants de viscosité et antioxydant sont connus dans l'art antérieur.

Le brevet US 4500440 revendique un copolymère éthylène-propylène porteurs de fonctions époxydes

obtenues par greffage du méthacrylate de glycidyle et traité par l'amino-5-tétrazole.

Les brevet US 4339561, US 4281192, DE 2943166 décrivent des copolymères de (méth)acrylates d'alkyle et d'hydroxy-2,5-triméthyl-3,4,6 benzyl(méth)acrylamide et éventuellement d'un monomère dispersant tel que le N,N, diméthylaminoéthyl (méth)acrylate.

Le brevet US 4170562 concerne la réaction de polymères oléfiniques oxydés avec une base de Mannich obtenues à partir d'une polyamine, d'un aldéhyde et d'un phénol. Cette réaction donne un mélange mal défini de plusieurs produits.

Le brevet américain 4668412 concerne la réaction des copolymères d'anhydrides maléiques et d'esters méthacryliques avec des bases de Mannich. Cependant il est connu que la copolymérisation de l'anhydride maléique est très incomplète et le copolymère formé est accompagné de monomère difficile à séparer. La formation d'une base de Mannich sans addition d'une amine supplémentaire fournit un produit réticulé inutilisable.

Les brevets US 4205151 et 4078091 décrivent des homopolymères d'un maléimide préparé par réaction d'un paraaminophénol disubstitué avec l'anhydride maléique.

Le brevet US 4098709 mentionne la préparation et l'utilisation de polymères antioxydants par réaction d'un dérivé phénolique sur un polymère porteur de fonctions acides carboxyliques libres. Le produit ayant une structure ester-amide est sensible à l'hydrolyse. La synthèse du motif phénolique est longue et couteuse. Elle passe par quatre étapes et de nombreuses purifications.

Les brevets US 4096139 et 3951831 concernent des polymères préparés par post-estérification d'un polymère porteur de fonctions acides carboxyliques libres par un béta hydroxyamide substitué par un dérivé du benzothiazole.

Nous avons trouvé maintenant une famille de composés polymériques utilisables comme additifs multifonctionnels aux lubrifiants. Ces composés améliorent la viscosité des lubrifiants tout en remplissant le rôle de dispersant et d'antioxydant.

Les composés polymériques selon l'invention utilisables notamment comme additifs multifonctionnels aux lubrifiants, résultent de la condensation d'une amine primaire ayant un groupement phénolique dans sa molécule obtenue par réaction d'un phenol, d'un (hydroxyphényl)alkylaldéhyde ou d'un (hydroxyphényl)alkylacide avec une polyamine, avec un copolymère à fonctions acide carboxylique formé par copolymérisation d'un acide monocarboxylique insaturé avec au moins un ester d'un tel acide ou par greffage d'un acide insaturé sur un polymère hydrocarboné.

L'acide monocarboxylique insaturé est en général copolymérisé avec au moins un ester de cet acide. La présence d'un monomère azoté peut être avantageux.

L'acide monocarboxylique insaturé est en général choisi parmi les acides acrylique et méthacrylique. Les esters correspondants sont formés avec des alcools renfermant de préférence entre 1 à 22 atomes de carbone. On peut citer comme exemples les (méth)acrylates de méthyle, éthyle, n-butyle, éthyl-2-hexyle, octyle, décyle, dodécyle, n-tétradécyle, n-hexadécyle, n-octadécyle.

On utilisera avantageusement un mélange industriel de plusieurs (méth)acrylates d'alkyle ayant des longueurs de chaîne variables. Si le nombre moyen d'atomes de carbone des chaînes alkyles est compris entre 6 et 15 et de préférence entre 8 et 13, le copolymère a un bon pouvoir épaississant et confère à l'huile un bon comportement à basse température.

Le monomère azoté pouvant entrer dans la composition du copolymère répond de préférence à la formule générale :

$$CH_2=CR_1\text{-}CO\text{-}X\text{-}R_2\text{-}NR_3R_4 \quad (I)$$

dans laquelle $R_1$ est l'atome d'hydrogène ou le radical méthyle,

X représente un atome d'oxygène ou de soufre ou le groupe —NH—

$R_2$ est un groupe alkylène contenant de 2 à 6 atomes de carbone

$R_3$ et $R_4$ identiques ou différents sont des radicaux alkyle, cycloalkyle, alkylaryle ou aryle. Il s'agit de préférence des radicaux méthyle et éthyle.

Comme exemple de monomères azotés on peut citer le N,N-diméthylaminopropylméthacrylamide, le N,N-diéthylaminopropylméthacrylamide,le N,N-diméthylaminoéthylméthacrylamide le N,N-diéthylaminoéthylméthacrylamide, le méthacrylate de N,N-diméthylaminoéthyle ou le méthacrylate de N,N-diéthylaminoéthyle.

Le copolymère peut également être préparé par greffage d'un acide insaturé sur un polymère hydrocarboné.

Le polymère hydrocarboné peut être choisi parmi les copolymères de l'éthylène, les polymères diéniques et les homopolymères d'alpha-oléfines.

Les polymères hydrocarbonés préférés sont des copolymères de l'éthylène. Ils contiennent en général de 15 à 90% et de préférence de 25 à 80% poids d'éthylène et 0 à 20% poids d'une diène non-conjugée, le complément provenant d'au moins une alpha-oléfine en $C_3$ à $C_{24}$.

Parmi les alpha-oléfines on peut citer le propylène, le butène, le pentène, l'heptane, l'octène, le nonène, le décène, le méthyl-4-pentène, le méthyl-5-pentène. Les copolymères d'éthylène renferment en général de une à trois de ces alpha-oléfines.

Les diènes non-conjugées linéaires ou cycliques sont en général choisis parmi l'hexadiène-1,4, le méthyl-2-pentadiène-1,4, le cyclopentadiène-1,4, le cyclooctadiène-1,5 et les dérivés du norbornène tel que le méthylène-5-norbornène-2.

Parmi les copolymères d'éthylène on utilise de préférence les copolymères éthylene-propylène.

Ces copolymères sont sensiblement amorphes et ils possèdent une masse moléculaire moyenne en poids comprise entre 5000 et 500000, de préférence entre 20000 et 100000 et une polydispersité inférieure à 10, de préférence inférieure à 4.

Les copolymères diéniques sont préparés par copolymérisation de deux dioléfines comme le butadiène, l'isoprène ou le diméthyl-2,2-butadiène ou la copolymérisation d'une di-oléfine avec le styrène.

Comme exemples de copolymères diéniques on peut citer les copolymères butadiène-styrène ou butadiène-isoprène. Ces copolymères sont utilisés de préférence sous forme hydrogénée pour réduire les insaturations oléfiniques et par conséquence leur sensibilité à l'oxydation.

Parmi les homopolymères diéniques on peut mentionner les polymères du butadiène, de l'isoprène ou du diméthyl-2,3-butadiène.

Les homopolymères d'alpha-oléfines sont issus d'alpha-oléfines renfermant au moins quatre atomes de carbone. Parmi ces homopolymères le plus important est le polyisobutylène.

L'acide insaturé qui sera greffé sur le polymère hydrocarboné comporte une double liaison polymérisable et au moins une fonction acide ou une fonction précurseur d'acide pouvant se transformer en fonction acide par hydrolyse ou oxydation après le greffage ou bien une fonction anhydride.

Dans le cadre de l'invention les acides (méth)acryliques, les (méth)acrylates d'alkyle, l'anhydride maléique, l'anhydride chloromaléique ou l'anhydride itaconique seront utilisés.

On utilisera avantageusement l'anhydride maléique car le greffage se fait dans des conditions douces et l'anhydride n'a pas tendance à former d'homopolymères comme sous-produits.

Les amines primaires ayant un groupement phénolique dans leur molécule sont obtenus par réaction d'un phénol, d'un (hydroxyphényl)alkylaldéhyde ou d'un (hydroxyphényl)alkylacide avec une polyamine.

Quand on utilise un phénol, l'introduction de la fonction amine a lieu en présence d'un aldéhyde par la réaction dite réaction de Mannich. Le phénol utilisé doit posséder au moins un hydrogène actif pouvant réagir avec l'aldéhyde. Cet hydrogène occupe de préférence la position ortho ou para par rapport au hydroxyle.

Les polyphénols, c'est-à-dire les composés possédant plus d'un groupe hydroxyle sur le noyau aromatique peuvent également être utilisés.

Les phénols sont en général choisis parmi le phénol, le para-terbutyl-phénol, le mono-terbutyl-paracrésol, le diterbutyl-2,6-phénol, le ditéramyl-2,4-phénol, le cathechol, le béta-naphtol ou le résorcinol. On utilisera avantageusement le diterbutyl-2,6-phénol.

Il est possible d'utiliser dans la réaction de Mannich un alkyl-aldéhyde linéaire ou cyclique ou bien un aldéhyde aromatique.

On utilisera de préférence le formaldéhyde ou ses dérivés comme le paraformaldehyde, l'acétaldéhyde ou le propionaldéhyde.

L'amine utilisée dans la réaction de Mannich est une polyamine contenant au moins deux groupements amines primaires. Ces molécules renferment en général 2 à 12 ou de préférence 2 à 8 atomes d'azote et 2 à 60 de préférence 2 à 20 atomes de carbone.

Comme exemple spécifique de ces amines on peut citer l'éthylène-diamine, la propylène-diamine, le diamino-1,4-butane et le diamino-1,6-hexane.

On peut également utiliser les polyalkylène et les polyoxyalkylène polyamines. Parmi les polyalkylène polyamines on peut citer les polyéthylène-amines telles que la diéthylène-triamine, la triéthylène-tétramine, la tetraéthylène-pentamine et les polypropylène-amines telles que les dipropylène-triamines.

Parmi les polyoxyalkylène polyamines on utilisera de préférence les diamines et les triamines. Ces produits ont une masse moléculaire comprise entre 400 et environ 2000. Ils sont commercialisés par la Société JEFFERSON CHEMICAL COMPANY INC. sous la marque JEFFAMINE (D 230,D 400, D 1000, T 403).

Les (hydroxyphényl)-alkylaldéhydes et acides répondent en général à la formule :

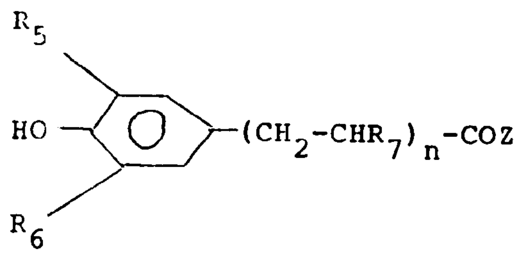

(II)

où

$R_5$ et $R_6$ sont des radicaux alkyle en $C_1$ à $C_{10}$ et de préférence en $C_1$ à $C_5$
$R_7$ est l'atome d'hydrogène ou le radical méthyle
n est un nombre entier compris entre 0 et 2 et de préférence égal à 1
Z est l'hydrogène ou le groupe hydroxyle.

On utilisera avantageusement le diterbutyl-3,5-hydroxy-4-benzaldéhyde ou le (diterbutyl-3,5-hydroxy-4-phényl)-3-propionaldéhyde ou l'acide (diterbutyl-3,5-hydroxy-4-phényl)-3-propionique.

Ces (hydroxyphényl)alkylaldéhydes et acides réagissent directement avec les polyamines vues précédemment pour former l'amine primaire ayant un groupement phénolique dans sa molécule. En utilisant un aldéhyde cette dernière sera une base de Schiff tandis que l'acide fournira un amide.

La copolymérisation de l'acide monocarboxylique insaturé avec l'ester correspondant et éventuellement un monomère azoté se fait selon les méthodes classiques de polymérisation par voie radicalaire en solution, en présence d'un amorceur radicalaire du type azobisisobutyronitrile ou péroxyde comme le péroxyde de benzoyle ou de lauryle et d'un agent de transfert de chaîne comme le dodécyl-mercaptan.

Le solvant peut être un solvant aromatique comme le toluène ou les xylènes ou une huile minérale ou synthétique de même nature que celle à laquelle le polymère doit être ajouté. On utilise 0,01 à 0,32 mole d'acide insaturé, 0,7 à 0,99 mole d'ester correspondant et 0 à 0,3 mole de monomère azoté.

La quantité de solvant sera en général telle que la concentration pondérale en matière sèche, à la fin de la réaction, soit comprise entre 10 et 30% et de préférence environ 25%.

La réaction est effectuée à une température comprise entre 40 et 140°C et de préférence entre 80 et 120°C. Selon les conditions opératoires la durée de la réaction peut varier de 2 à 10 heures, de préférence 3 à 5 heures.

On obtient le copolymère sous la forme d'une solution visqueuse.

Le copolymère renferme 0,1 à 15% de motifs provenant de l'acide insaturé, en général l'acide (méth)acrylique, 70 à 99,9% de motifs provenant d'un ester insaturé en général un (méth)acrylate et 0 à 15% de monomère azoté de formule (I).

Pour le greffage de l'acide insaturé sur un polymère hydrocarboné on peut utiliser toute méthode de greffage connue pour fixer un monomère sur un polymère hydrocarboné. En général le polymère est dissous dans un solvant hydrocarboné. Cette solution additionnée d'un générateur de radicaux libres est portée à la température du greffage et maintenue à cette température pendant un temps suffisant pour former des sites actifs sur le copolymère. L'acide insaturé, de préférence l'anhydride maléique est ajouté en quantité convenable. On utilise en général 1 à 20% poids et de préférence 5 à 15% poids d'acide insaturé par rapport au polymère hydrocarboné.

Le polymère greffé peut ensuite être isolé par évaporation du solvant. Il est également possible de préparer le polymère greffé dans une huile. Il n'est alors pas nécessaire d'isoler le polymère qui est recueilli sous forme d'une solution concentrée dans l'huile à laquelle on ajoutera l'amine primaire.

Le greffage de l'anhydride maléique sur un polymère oléfinique en phase solvant est décrit dans les brevets américains : 4144181 et 4137185 alors que le brevet américain 3862265 et les brevets britaniques 1119629, 857797 et 832193 décrivent un procédé de greffage en absence de solvant par mastication en présence ou en absence d'oxygène.

Pour inhiber les réactions de réticulation lors du greffage le brevet américain 4160072 et la demande de brevet européen 171167 préconisent l'emploi d'agents de transfert de chaîne, comme les mercaptans, en association avec des promoteurs radicalaires.

Lorsque l'amine primaire ayant un groupement phénolique provient d'un phénol, elle est obtenue par la réaction de Mannich. La base de Mannich est obtenue par addition de 0,8 à 1,5 mole, de préférence 1,2 mole d'aldéhyde, de 0,8 à 2,5 de préférence 1 mole de polyamine à une mole de phénol.

La réaction est effectuée sous agitation, d'abord à température ambiante, sous une atmosphère de gaz inerte tel que l'azote puis à une température comprise entre 80 et 130°C et de préférence autour de 100°C, pendant une durée comprise entre 2 et 10 heures.

On opère généralement en présence d'un solvant polaire comme l'isopropanol ou encore un solvant aromatique comme le toluène ou les xylènes. L'eau formée au cours de la réaction est éliminée par entrainement azéotropique.

Après la réaction il suffit d'éliminer le solvant pour recueillir la base de Mannich qui peut être condensée directement sur les copolymères à fonctions acide.

La formation des bases de Schiff à partir des (hydroxyphényl) alkylaldéhydes et des polyamines, ainsi que la formation d'amides à partir des (hydroxyphényl)-alkylacides et des polyamines a lieu généralement par chauffage des réactifs dans un solvant polaire formant un azéotrope avec l'eau. Les conditions opératoires sont celles décrites pour l'obtention des bases de Mannich.

La condensation du copolymère à fonctions acide carboxylique avec l'amine primaire est réalisée dans un solvant organique ou dans une huile à une température comprise entre 120 et 170°C pendant 3 à 8 heures. On utilise en général 0,8 à 1,2, de préférence 1 mole de dérivé phénolique par fonction acide du copolymère.

On observe un accroissement important de la viscosité du milieu réactionnel. La condensation conduit à la création de fonctions amides sur les copolymères porteurs de groupes carboxyliques libres ou à la création d'imides sur les copolymères porteurs de groupes anhydrides.

La concentration des produits ainsi obtenus dans les compositions lubrifiantes prêtes à l'emploi est généralement de l'ordre de 0,2 à 15% et de préférence de 1 à 10% en poids.

Toutefois des concentrations plus élevées, par exemple 15 à 30% peuvent être envisagées, lorsque la composition lubrifiante se présente sous la forme d'un concentré à diluer au moment de l'emploi.

L'additif peut être incorporé dans les huiles lubrifiantes naturelles ou synthétiques ou bien des mélanges de telles huiles. A titre d'exemple on peut citer des huiles minérales ordinaires ou raffinées de composition paraffinique ou naphténique et les huiles hydroraffinées. Les huiles synthétiques, comme les polybutènes, les alkylbenzènes tels que le dinonylbenzène et le tetradécylbenzène, les éthers ou esters de polypropylèneglycols, les esters d'acides polycarboxyliques tels que l'adipate de méthyle et l'heptanoate de pentaérythritol, les huiles de silicone telles que les polysiloxanes, les esters totaux ou partiels de l'acide phosphorique notamment le tricrésylphosphate et les acides alkylphosphoriques conviennent également.

Il est possible d'associer les composés polymériques selon l'invention avec d'autres additifs usuels des lubrifiants comme des inhibiteurs de corrosion, les détergents et des additifs antiusure, dispersant et antimousse.

Les compositions lubrifiantes renfermant le composé polymérique selon l'invention sont utilisables notamment comme huiles pour carters destinées aux moteurs à combustion interne, comme huiles pour carter de pont, comme huiles pour engrenage et pour faciliter l'usinage des métaux.

Les exemples suivants illustrent l'invention sans toutefois la limiter.

EXEMPLE 1

a) Dans un réacteur, on introduit sous agitation 74,72 g (0,294 mole) de méthacrylate de lauryle, 24,72 g (0,0731 mole) de méthacrylate de stéaryle, 6,2 g (0,072 mole) d'acide méthacrylique, 0,07 g de dodécanéthiol et 54,2 g d'huile minérale 100 N.
L'ensemble est porté à 80°C en 30 mn sous atmosphère d'azote ; on ajoute alors 0,18 g d'azobisisobutyronitrile et la température est maintenue à 80-85°C pendant 2 heures. Après 2 heures de réaction on obtient une masse visqueuse que l'on dilue avec 258 g d'huile minérale 150 N. L'ensemble est agité à 80°C pendant 15 mn, puis on introduit 0,03 g d'azobisisobutyronile. On porte le mélange à 100°C et on le maintient à cette température pendant 1h.30. Après refroidissement à 20°C la viscosité de cette solution de polymère est de 85 Pa · s.

b) On prépare une base de Mannich en introduisant dans un réacteur 35,30 g (0,171 mole) de diterbutyl-2,6-phénol, 23,94 g (0,206 mole) de diamino-1,6-hexane et 68 g d'isopropanol, on agite jusqu'à l'obtention d'une solution homogène en chauffant l'ensemble à 40°C sous atmosphère d'azote. On introduit alors 6,38 g (0,212 mole) de paraformaldéhyde. Le milieu réactionnel devient vert, puis jaune et limpide lorsqu'on le chauffe à 60°C. Après 10 heures de chauffage à reflux, on élimine l'eau formée par distillation azéotropique et le solvant est éliminé par évaporation sous vide. Le produit obtenu est un liquide visqueux que l'on caractérise par RMN et IR (bande d'adsorption à 770 $cm^{-1}$ caractéristique d'une substitution en para de la fonction phénol).

c) Dans un ballon de 250 ml, on porte à 150°C pendant 8 heures sous agitation et sous atmosphère de gaz inerte 4,65 g de la solution de polymère préparé en 1a, 1,42 g de la ase de Mannich préparée en 1b et 38 g de xylène. Après vaporation du solvant on obtient 26 g d'une solution ontenant 29% d'un polymère dans un mélange d'huile inérale et constituant l'additif I.

EXEMPLE 2

a) on prépare un polyméthacrylate comme dans l'exemple 1a mais en utilisant les monomères suivants :

| | | |
|---|---|---|
| méthacrylate de lauryle | 89,1g | (0,35 mole) |
| méthacrylate de stéaryle | 30,1g | (0,089 mole) |
| acide méthacrylique | 4,94g | (0,057 mole) |
| méthacrylate de N,N diméthylaminoéthyle | 4,90g | (0,031 mole) |
| dodécanéthiol | 0,088g | |
| AIBN = 0,25 + 0,03g | | |
| huile 100 N = 62g | | |
| huile 150 N = 216g | | |

on obtient une solution d'un polyméthacrylate à 31,7% de matière active.

b) on porte à 160°C pendant 8 heures 105,48 g de la solution de polymère préparé en 2a et 4,98 g de la base de Mannich préparée en 1a. L'eau formée au cours de la réaction est éliminée par entrainement avec un courant d'azote.

On obtient une solution d'un polyméthacrylate à 34,8% de matière active dans un mélange d'huiles minérales.

EXEMPLE 3

a) Dans un réacteur thermostaté de 1 l, contenant 800 g de xylène, on introduit sous agitation 80 g d'un copolymère éthylène-propylène d'une masse moléculaire moyenne en poids de 138000 et contenant 50% en poids de propylène et l'on maintient l'ensemble à température ambiante pendant 10 heures pour dissoudre le polymère en même temps qu'on effectue un léger barbotage d'azote. On introduit ensuite 8 g d'anhydride maléique et 3,2 g de péroxyde de benzoyle. Le mélange est porté à 80°C et maintenu à cette température avec une légère suppression d'azote (0,5 bar), pendant 4 heures. Une partie est précipitée dans l'isopropanol, séchée sous vide et caractérisée par spectroscopie infrarouge (bandes anhydrides 1790 et 1860 $cm^{-1}$, bande acide 1710 $cm^{-1}$) et par analyse élémentaire indiquant un pourcentage en poids de monomère greffé égal à 5%. Le polymère greffé est conservé en solution dans le xylène.

b) A la totalité de la solution préparé en 3a maintenue à 80°C, on ajoute progressivement 26,7 g de la base de Mannich préparée en 1b. On observe une augmentation de la viscosité du milieu. La réaction est poursuivie pendant 1 heure. On équipe alors le réacteur d'un Dean-Stark muni d'un réservoir de récupération. On monte la température à 120°C et cette température est maintenue jusqu'à obtention du volume d'eau théorique. Le polymère est précipité et caractérisé par IR bandes imide (1705 et 1770 $cm^{-1}$), bande phénol 3640 $cm^{-1}$, disparition des bandes anhydride et amine primaire.

EXEMPLE 4

a) on prépare un amide en introduisant 306 g de (diterbutyl-3,5-hydroxy-4-phényl) propionate d'éthyle et 515 g de diéthylènetriamine dans un réacteur de 1 l équipé d'un Dean Stark. On monte la température à 120°C pendant 4 heures, temps nécessaire pour recueillir 40 g d'éthanol. On obtient une huile visqueuse dont le taux de conversion déterminé par RMN est de 90%. Pour enlever l'excès d'amine on effectue un lavage à l'eau et le produit purifié insoluble dans l'eau est récupéré par décantation.

b) on répète la synthèse du polymère greffé dans les conditions de l'exemple 3a puis on ajoute 14,8 g de l'amide préparé selon 4a et on laisse l'ensemble pendant 1 heure sous agitation à 80°C. On équipe alors le réacteur d'un Dean Stark et on porte à reflux du solvant pour éliminer l'eau par distillation azéotropique. (Le polymère est précipité et caractérisé par spectroscopie infrarouge bandes imide (1705, 1770 $cm^{-1}$) bande amide (1680 $cm^{-1}$) bande phénol (3640 $cm^{-1}$), disparition des bandes anhydride et amine primaire.

EXEMPLE 5

a) on prépare une base de Schiff en portant à 60°C 8,8 g ($8,5.10^{-2}$ mole) de diéthylènetriamine dans 50 g

de xylène. On ajoute ensuite 20 g ($8,5.10^{-2}$ mole) de diterbutyl-3,5 hydroxy-4-benzaldéhyde préalablement dissout dans 50 g de xyléne. On maintient sous agitation à 60°C pendant 1 heure, puis 2 heures à 80°C sous un léger barbotage d'azote jusqu'à l'obtention du volume d'eau théorique.

b) on répète la synthèse du polymère greffé dans les conditions de l'exemple 3a puis on ajoute 11,05 g de la base de Shiff préparé selon 5a et on laisse l'ensemble pendant 1 heure sous agitation à 80°C. On équipe alors le réacteur d'un Dean Stark et on porte à reflux du solvant pour éliminer l'eau par distillation azéotropique. Le polymère est précipité par l'isopropanol, séché et caractérisé par spectroscopie infrarouge bandes imide (1705, 1770 $cm^{-1}$), bande phénol (3640 $cm^{-1}$), disparition des bandes anhydride et amine primaire.

EXEMPLE 6

Dans cet exemple, on étudie l'effet des additifs de l'invention sur l'indice de viscosité des huiles lubrifiantes, dans les conditions de la norme NT 60-100, à l'aide d'un viscosimètre CANNON-FENSKE à partir de compositions lubrifiantes obtenues par addition des additifs de l'invention à une huile minérale "150 Neutral" (huile paraffinique neutre présentant une viscosité égale à $33.10^{-6}$ $m^2/s$ à 36,8°C et $5,34.10^{-6}$ $m^2/s$ à 98,9°C et un indice de viscosité égal à 105).

On rappelle que l'indice de viscosité ($VI_E$) d'une huile et un nombre caractérisant la variation de viscosité de cette huile en fonction de la température dans une échelle conventionnelle. Ledit indice est d'autant plus élevé que cette variation est plus faible.

| Huile 150N+ | % d'additif (en matière active) | viscosité à 36,8°C en $10^{-6} m^2/s$ | viscosite à 98,9°C en $10^{-6} m^2/s$ | $VI_E$ |
|---|---|---|---|---|
| I a | 2 | 39,0 | 6,90 | 137 |
| I c | 2 | 41,8 | 7,26 | 138 |
| II a | 2 | 43,60 | 7,63 | 144 |
| II b | 2 | 43,48 | 7,72 | 148 |

L'incorporation des additifs suivant l'invention à l'huile lubrifiante améliore de façon sensible l'indice de viscosité de cette huile. En outre en comparant les résultats obtenus avec les polymères de référence Ia et IIa on peut constater que les polymères de l'invention Ic et IIb ont un effet sur l'indice de viscosité supérieur ou égal à ceux des polymères témoins.

EXEMPLE 7

Dans cet exemple, on mesure la stabilité thermique des polymères de l'invention, et plus particulièrement le temps d'induction à l'oxydation par analyse thermique différentielle.

On chauffe un échantillon des polymères de l'invention à 200°C sous un courant d'azote pendant 10 minutes, puis on remplace le courant d'azote par un courant d'oxygène (10 l/h) en même temps que l'on déclenche le chronomètre et on mesure le temps d'induction (T) correspondant à l'apparition d'un phénomère exothermique caractéristique du début d'oxydation du polymère.

| Additif | Ic | IIb | IIIb | IVb | Vb | Ia | IIa | IIIa |
|---|---|---|---|---|---|---|---|---|
| T (mn) | >60 | >60 | 65 | >110 | 47 | <1 | <1 | <1 |

On observe que la fixation des motifs antioxydants sur les polymères les stabilisent et les protègent de façon efficace contre l'oxydation à température élevée. Les résultats sont à comparer à ceux obtenus avec les polymères de référence Ia, IIa et IIIa qui sont très sensibles à la présence d'oxygène à des températures élevées.

## Revendications

1. Composés polymériques utilisables notamment comme additifs multifonctionnels aux lubrifiants, caractérisés en ce qu'ils résultent de la condensation d'une amine primaire ayant un groupe phénolique dans sa molécule obtenue par réaction d'un phénol, d'un (hydroxyphényl)alkylaldéhyde ou d'un (hydroxyphényl)alkylacide avec une polyamine, avec un copolymère à fonctions acide carboxylique formé par copolymérisation d'un acide monocarboxylique insaturé avec au moins un ester d'un tel acide ou par greffage d'un acide insaturé sur un polymère hydrocarboné.

2. Composés polymériques selon la revendication 1 caractérisés en ce qu'ils sont obtenus par copolymérisation d'un acide monocarboxylique insaturé avec au moins un ester d'un tel acide en présence d'un monomère azoté.

3. Composés polymériques selon la revendication 2 caractérisés en ce que l'acide insaturé est l'acide (méth)acrylique et les esters correspondants sont formés avec des alcools en $C_1$ à $C_{22}$.

4. Composés polymériques selon la revendication 3 caractérisés en ce que les esters sont des méthacrylates d'alkyle ayant des longueurs de chaîne variables de préférence compris entre $C_6$ et $C_{15}$ et plus particulièrement entre $C_8$ et $C_{13}$.

5. Composés polymériques selon l'une des revendications 1 à 4 caractérisés en ce que le monomère azoté répond à la formule générale

$$CH_2=CR_1\text{-}CO\text{-}X\text{-}R_2\text{-}NR_3R_4 \quad (I)$$

dans laquelle $R_1$ est l'atome d'hydrogène ou le radical méthyle

X représente un atome d'oxygène ou de soufre ou le groupe —NH—

$R_2$ est un groupe alkylène contenant de 2 à 6 atomes de carbone.

$R_3$ et $R_4$ identiques ou différents sont des radicaux alkyle, cycloalkyle, alkylaryle ou aryle de préférence des radicaux méthyle ou éthyle.

6. Composés polymériques selon l'une des revendications 1 à 5 caractérisés en ce qu'ils sont formés par copolymérisation de 0,01 à 0,32 mole d'acide monocarboxylique insaturé, 0,7 à 0,99 mole d'un ester correspondant et 0 à 0,3 mole de monomère azoté.

7. Composés polymériques selon la revendication 1 caractérisés en ce que l'acide insaturé greffé sur un copolymère hydrocarboné comporte une double liaison polymérisable et au moins une fonction acide ou précurseur d'acide ou bien une fonction anhydride.

8. Composés polymériques selon la revendication 7 caractérisés en ce que l'acide insaturé est l'anhydride maléique.

9. Composés polymériques selon la revendication 7 caractérisés en ce que le polymère hydrocarboné est un copolymère de l'éthylène renfermant 15 à 90% et de préférence 25 à 80% poids d'éthylène, 0 à 20% poids d'un diène non-conjugé, le complément provenant d'une alpha-oléfine en $C_3$ à $C_{24}$ de préférence du propylène.

10. Composés polymériques selon la revendication 7 caractérisés en ce que le polymère hydrocarboné est un copolymère diénique obtenu par copolymérisation de deux dioléfines ou d'une dioléfine avec le styrène, comme les copolymères butadiène-isoprène et butadiène-styrène.

11. Composés polymériques selon la revendication 7 caractérisés en ce que le polymère hydrocarboné

est un homopolymère d'une dioléfine comme le butadiène, l'isoprène, le diméthyl-2,3-butadiène ou d'une alpha-oléfine renfermant au moins quatre atomes de carbone comme l'isobutylène.

12. Composés polymériques selon l'une des revendication 1 à 11 caractérisés en ce que l'amine primaire ayant un groupement phénolique dans sa molécule est obtenue à partir d'un phénol ayant au moins un hydrogène actif, de préférence le diterbutyl-2,6-phénol, un aldéhyde de préférence le formaldéhyde, l'acétaldéhyde ou le propionaldéhyde et une polyamine.

13. Composés polymériques selon l'une des revendications 1 à 11 caractérisés en ce que l'amine primaire ayant un groupement phénolique dans sa molécule est obtenue par réaction d'une polyamine avec un aldéhyde ou acide de formule générale

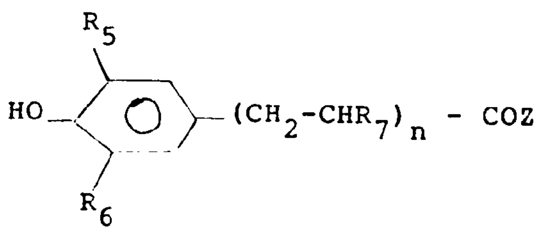

(II)

où

$R_5$ et $R_6$ sont des radicaux alkyle en $C_1$ à $C_{10}$ et de préférence en $C_1$ à $C_5$

$R_7$ est l'atome d'hydrogène ou le radical méthyle

n est un nombre entier compris entre 0 et 2 et de préférence égal à 1

Z est l'hydrogène ou le groupe hydroxyle.

14. Composés polymériques selon la revendication 13 caractérisés en ce que le composé de formule générale II est le (diterbutyl-3,5-hydroxy-4-phényl)-3-propionaldéhyde ou l'acide (diterbutyl-3,5-hydroxy-4-phényl)-3-propionique.

15. Composés polymériques selon la revendication 12 caractérisés en ce que la polyamine renferme 2 à 12 et de préférence 2 à 8 atomes d'azote dont au moins deux groupements amines primaires et 2 à 60 et de préférence 2 à 20 atomes de carbone comme l'éthylène diamine, le propylène diamine, le diamino-1-4-butane et le diamino-1,6-hexane.

16. Composés polymériques selon la revendication 13 caractérisés en ce que la polyamine est une polyalkylène polyamine ou une polyoxyalkylène polyamine.

17. Composés polymériques selon l'une des revendications 1 à 16 caractérisés en ce que la condensation du copolymère à fonctions acide carboxylique avec l'amine primaire ayant un groupement phénolique dans sa molécule est réalisée dans un solvant organique ou dans une huile à une température comprise entre 120 et 170°C pendant 3 à 8 heures en utilisant 0,8 à 1,2 et de préférence 1 mole de phénol par groupe carboxylique du copolymère.

18. Composition lubrifiante caractérisée en ce qu'elle renferme une huile lubrifiante naturelle ou synthétique et 0,2 à 15% poids et de préférence 1 à 10% poids d'un composé polymérique selon les revendications 1 à 17.

19. Composition lubrifiante concentrée caractérisée en ce qu'elle renferme 15 à 30% poids d'un composé polymérique selon les revendications 1 à 17.

20. Composition lubrifiante selon la revendication 18 ou 19 caractérisée en ce qu'elle renferme d'autres additifs usuels des lubrifiants comme des inhibiteurs de corrosion, les détergents et des additifs antisusure, dispersant et antimousse.

## Patentansprüche

1. Insbesondere als multifunktionale Zusätze zu Schmiermitteln verwendbare Polymerverbindungen, dadurch **gekennzeichnet**, daß sie durch Kondensation eines primären Amins mit einer Phenolgruppe im Molekül, erhalten durch Umsetzung eines Phenols, eines Hydroxyphenylalkylaldehyds oder einer Hydroxyphenylalkylsäure mit einem Polyamin, mit einem Copolymerisat mit Carbonsäurefunktionen, gebildet durch Copolymerisation einer ungesättigten Monocarbonsäure mit wenigstens einem Ester einer solchen Säure oder durch Aufpfropfen einer ungesättigten Säure auf ein Kohlenwasserstoffpolymer, erhalten worden sind.

2. Polymerverbindungen nach Anspruch 1, dadurch **gekennzeichnet**, daß sie durch Copolymerisation einer ungesättigten Monocarbonsäure mit wenigstens einem Ester einer solchen Säure in Anwesenheit eines

Stickstoffmonomeren erhalten worden sind.

3. Polymerverbindungen nach Anspruch 2, dadurch **gekennzeichnet**, daß die ungesättigte Säure (Meth)-acrylsäure ist und die entsprechenden Ester mit $C_{1-22}$-Alkoholen gebildet worden sind.

4. Polymerverbindungen nach Anspruch 3, dadurch **gekennzeichnet**, daß die Ester Alkylmethacrylate mit einer Kettenlänge, die vorzugsweise zwischen $C_6$ und $C_{15}$ und insbesondere zwischen $C_8$ und $C_{13}$ liegt, sind.

5. Polymerverbindungen nach einem der Ansprüche 1 bis 4, dadurch **gekennzeichnet**, daß das Stickstoffmonomer der allgemeinen Formel

$$CH_2{=}CR_1\text{-}CO\text{-}X\text{-}R_2\text{-}NR_3R_4 \quad (I)$$

entspricht, worin $R_1$ ein Wasserstoffatom oder ein Methylrest,
X ein Sauerstoff- oder Schwefelatom oder die Gruppe —NH—,
$R_2$ eine Alkylengruppe mit 2 bis 6 C-Atomen bedeuten und
$R_3$ und $R_4$ identisch oder verschieden sind und Alkyl-, Cycloalkyl-, Alkylaryl- oder Arylreste, vorzugsweise jedoch Methyl oder Ethyl bedeuten.

6. Polymerverbindungen nach einem der Ansprüche 1 bis 5, dadurch **gekennzeichnet**, daß sie durch Copolymerisation von 0,01 bis 0,32 Mol ungesättiger Monocarbonsäure, 0,7 bis 0,99 Mol eines entsprechenden Esters und 0 bis 0,3 Mol Stickstoffmonomer gebildet worden sind.

7. Polymerverbindungen nach Anspruch 1, dadurch **gekennzeichnet,** daß die auf ein Kohlenwasserstoff-Copolymerisat aufgepfropfte ungesättigte Säure eine polymerisierbare Doppelbindung und wenigstens eine Säure- oder Säurevorläuferfunktion oder auch eine Anhydridfunktion aufweist.

8. Polymerverbindungen nach Anspruch 7, dadurch **gekennzeichnet**, daß die ungesättigte Säure Maleinsäureanhydrid ist.

9. Polymerverbindungen nach Anspruch 7, dadurch **gekennzeichnet**, daß das Kohlenwasserstoffpolymer ein Ethylen-Copolymerisat mit 15 bis 90, vorzugsweise 25 bis 80 Gew.-% Ethylen und 0 bis 20 Gew.-% eines nichtkonjugierten Diens ist, wobei der Rest auf ein $C_{3-24}$-$\alpha$-Olefin, vorzugsweise Propylen, entfällt.

10. Polymerverbindungen nach Anspruch 7, dadurch **gekennzeichnet**, daß das Kohlenwasserstoffpolymer ein Dien-Copolymerisat ist, erhalten durch Copolymerisation von zwei Diolefinen oder eines Diolefins mit Styrol wie die Copolymerisate Butadien-Isopren und Butadien-Styrol.

11. Polymerverbindungen nach Anspruch 7, dadurch **gekennzeichnet**, daß das Kohlenwasserstoffpolymer ein Homopolymer eines Diolefins wie Butadien, Isopren, Dimethyl-2,3-butadien oder eines $\alpha$-Olefins mit mindestens 4 C-Atomen wie Isobutylen ist.

12. Polymerverbindungen nach einen der Ansprüche 1 bis 11, dadurch **gekennzeichnet**, daß das primäre Amin mit einer Phenolgruppe im Molekül aus einem Phenol mit wenigstens einem aktiven Wasserstoff, vorzugsweise Di-tert.butyl-2,6-phenol, einem Aldehyd, vorzugsweise Formaldehyd, Acetaldehyd oder 1-Propionaldehyd und einem Polyamin erhalten wurde.

13. Polymerverbindungen nach einem der Ansprüche 1 bis 11, dadurch **gekennzeichnet**, daß das primäre Amin mit einer Phenolgruppe im Molekül erhalten wurde durch Umsetzung eines Polyamins mit einem Aldehyd oder einer Säure der allgemeinen Formel

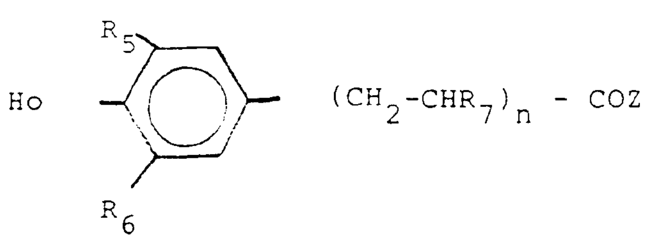 (II)

worin
$R_5$ und $R_6$ $C_{1-10}$-Alkyl und vorzugsweise $C_{1-5}$-Alkyl,
$R_7$ das Wasserssoffatom oder Methyl,
n eine ganze Zahl von 0 bis 2 und vorzugsweise 1, und
Z Wasserstoff oder die Hydroxylgruppe bedeuten.

14. Polymerverbindungen nach Anspruch 13, dadurch **gekennzeichnet**, daß die Verbindung der allgemeinen Formel II (Di-tert.butyl-3,5-hydroxy-4-phenyl)-3-propionaldehyd oder (Di-tert · butyl-3,5-hydroxy-4-phenyl)-3-propionsäure ist.

15. Polymerverbindungen nach Anspruch 12, dadurch **gekennzeichnet**, daß das Polyamin 2 bis 12, vorzugsweise 2 bis 8 N-Atome, darunter wenigstens zwei primäre Amingruppen, und 2 bis 60, vorzugsweise 2 bis 20 C-Atome aufweist, wie Ethylendiamin, Propylendiamin, Diamino-1,4-butan und Diamino-1,6-hexan.

16. Polymerverbindungen nach Anspruch 13, dadurch **gekennzeichnet**, daß das Polyamin ein Polyalkylenpolyamin oder ein Polyoxyalkylenpolyamin ist.

17. Polymerverbindungen nach einem der Ansprüche 1 bis 16, dadurch **gekennzeichnet**, daß die Kondensation des Copolymerisats mit Carbonsäurefunktionen mit dem primären Amin, das in seinem Molekül eine Phenolgruppe aufweist, in einem organischen Lösungsmittel oder in einem Öl bei einer Temperatur zwischen 120 und 170°C während 3 bis 8 Stunden unter Verwendung von 0,8 bis 1,2, vorzugsweise 1 Mol Phenol pro Carboxylgruppe des Copolymerisats durchgeführt wird.

18. Schmiermittelzusammensetzung, dadurch **gekennzeichnet**, daß sie ein natürliches oder synthetisches Schmieröl mit 0,2 bis 15, vorzugsweise 1 bis 10 Gew.-% einer Polymerverbindung nach einem der Ansprüche 1 bis 17 enthält.

19. Konzentrierte Schmiermittelzusammensetzung, dadurch **gekennzeichnet**, daß sie 15 bis 30 Gew.-% einer Polymerverbindung nach einem der Ansprüche 1 bis 17 enthält.

20. Schmiermittelzusammensetzung nach Anspruch 18 oder 19, dadurch **gekennzeichnet**, daß sie auch noch andere übliche Schmiermittelzusätze wie Korrosionsinhibitoren, Detergenzien, Mittel zur Erhöhung der Verschleißfestigkeit, Dispergatoren und Schauminhibitoren enthält.

## Claims

1. Polymeric compounds, which can be used in particular as polyfunctional additives to lubricants, characterised in that they result from the condensation of a primary amine with a phenolic group in its molecule, obtained by the reaction of a phenol, a (hydroxyphenyl)alkyl aldehyde or a (hydroxyphenyl)alkyl acid with a polyamine, with a copolymer with carboxylic acid groups formed by copolymerisation of an unsaturated monocarboxylic acid with at least one ester of such an acid or by grafting an unstaurated acid onto a hydrocarbon polymer.

2. Polymeric compounds according to claim 1 characterised in that they are obtained by copolymerisation of an unsaturated monocarboxilic acid with a least one ester of such an acid in the presence of an nitrogen-containing monomer.

3. Polymeric compounds according to claim 2 characterised in that the unsaturated acid is (meth)acrylic acid and the corresponding esters are formed with $C_1$ to $C_{22}$ alchohols.

4. Polymeric compounds according to claim 3 characterised in that the esters are alkyl methacrylates having chains of variable length, preferably between $C_6$ and $C_{15}$ and more particularly between $C_8$ and $C_{13}$.

5. Polymeric compounds according to any one of claims 1 to 4 characterised in that the nitrogen-containing monomer corresponds to the general formula

$$CH_2{=}CR_1\text{-}CO\text{-}X\text{-}R_2\text{-}NR_3R_4 \quad (I)$$

in which R is a hydrogen atom or methyl radical ;

X represents an oxygen or sulphur atom or the group —NH— ;

$R_2$ is an alkylene group containing from 2 to 6 carbon atoms ;

$R_3$ and $R_4$, which may be the same or different, are alkyl, cycloalkyl, alkylaryl or aryl radicals, preferably methyl or ethyl radicals.

6. Polymeric compounds according to any one of claims 1 to 5 characterised in that they are formed by copolymerisation of 0.01 to 0.32 moles of non-saturated monocarboxylic acid, 0.7 to 0.99 moles of a corresponding ester and 0 to 0.3 moles of nitrogen-containing monomer.

7. Polymeric compounds according to claim 1 characterised in that the non-saturated acid grafted onto a hydrocarbon copolymer includes a polymerisable double band and at least one acid group or acid precursor of an acid or even an anhydride function.

8. Polymeric compounds according to claim 7 characterised in that the saturated acid is maleic anhydride.

9. Polymeric compounds according to claim 7, characterised in that the hydrocarbon polymer is an ethylene copolymer, formed from 15 to 90 weight% and preferably 25 to 80 weight% of ethylene, 0 to 20 weight% of a non-conjugated diene, the remainder being provided by a $C_3$ to $C_{24}$ alpha-olefin, preferably propylene.

10. Polymeric compounds according to claim 7, characterised in that the hydrocarbon polymer is a diene copolymer obtained by the copolymerisation of two diolefins or of one diolefin with styrene, such as butadine-isoprene and butadine-styrene copolymers.

11. Polymeric compounds according to claim 7, characterised in that the hydrocarbon polymer is a

homopolymer of a diolefin such as butadine, isoprene, dimethyl-2,3-butadiene or of an alpha-olephin contain at least four carbon atoms such as isobutylene.

12. Polymeric compounds according to any one of claims 1 to 11, characterised in that the primary amine with a phenolic group in its molecule is obtained from a phenol with at least one active hydrogen, preferably diterbutyl-2,6-phenol, an aldehyde, preferably formaldehyde, acetaldehyde or propionaldhyde, and a polyamine.

13. Polymeric compounds according to any one of claims 1 to 11, characterised in that the primary amine with a phenolic group in its molecule is obtained by the reaction of a polyamine with an aldehyde or acid of the general formula

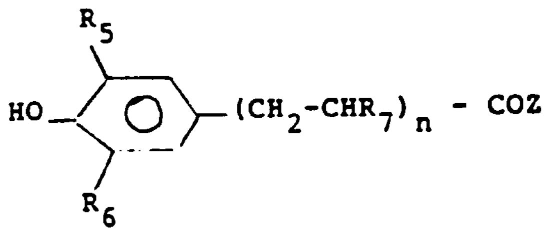

(II)

where

$R_5$ and $R_6$ are $C_1$ to $C_{10}$, and preferably $C_1$ to $C_5$ alkyl radicals ;

$R_7$ is a hydrogen atom or methyl radical ;

n is an integer from 0 to 2 and preferably equal to 1 ;

Z is hydrogen or a hydroxyl group.

14. Polymeric compounds according to claim 13, characterised in that the compound of the general formula II is (diterbutyl-3,5-hydroxy-4-phenyl)-3-propionaldehyde or (diterbutyl-3,5-hydroxy-4-phenyl)-3-propionic acid.

15. Polymeric compounds according to claim 12, characterised in that the polyamine contains 2 to 12 and preferably 2 to 8 nitrogen atoms including at least two primary amine groups and 2 to 60 and preferably 2 to 20 carbon atoms such as ethylene diamine, propylene diamine, diamino-1,4-butane and diamino-1,6-hexane.

16. Polymeric compounds according to claim 13 characterised in that the polyamine is a polyalkylene polyamine or a polyoxylalkylene polyamine.

17. Polymeric compounds according to any one of claims 1 to 16 characterised in that the condensation of the copolymer with carboxylic acid groups with the primary amine with a phenolic group in its molecule is performed in an organic solvent or in an oil at a temperature of between 120 and 170°C for 3 to 8 hours using 0.8 to 1.2 and preferably 1 mol of phenol for each carboxylic group in the copolymer.

18. Lubricant composition characterised in that it contains a natural or synthetic luricating oil and 0.2 to 15 weight% and preferably 1 to 10 weight% of a polymeric compound according to claims 1 to 17.

19. Concentrated lubricant composition characterised in that it contains 15 to 30 weight% of a polymeric compound according to claims 1 to 17.

20. Lubricant composition according to claim 18 or 19 characterised in that it contains other conventional additives for lubricants such as anti-corrosion agents, detergents and anti-wear, dispersant additives, and anti-foaming additives.